(19) Europäisches Patentamt
European Patent Office
Office européen des brevets

(11) **EP 1 079 559 B1**

(12) **EUROPÄISCHE PATENTSCHRIFT**

(45) Veröffentlichungstag und Bekanntmachung des Hinweises auf die Patenterteilung:
**31.10.2007 Patentblatt 2007/44**

(51) Int Cl.:
*H04J 3/06* *(2006.01)* *H04B 7/26* *(2006.01)*

(21) Anmeldenummer: **00117169.3**

(22) Anmeldetag: **10.08.2000**

(54) **Verfahren und Anordnung zur Synchronisation von Systemeinheiten**

Method and arrangement for synchronising system units

Procédé et dispositif de synchronisation d'unités de système

(84) Benannte Vertragsstaaten:
**DE FR GB IT**

(30) Priorität: **18.08.1999 US 376945**

(43) Veröffentlichungstag der Anmeldung:
**28.02.2001 Patentblatt 2001/09**

(73) Patentinhaber: **SIEMENS AKTIENGESELLSCHAFT**
**80333 München (DE)**

(72) Erfinder:
• **Rupprecht, Johannes**
**81669 München (DE)**
• **Manzardo, Marcel-Bruno**
**Los Gatos, CA 95032 (US)**

(56) Entgegenhaltungen:
**EP-A- 0 817 404          EP-A- 0 887 960**
**DE-A- 19 752 945        US-A- 5 857 009**

EP 1 079 559 B1

**Beschreibung**

Die Erfindung betrifft ein Verfahren zur Synchronisation von Systemeinheiten, welche über eine insbesondere asynchron übertragene Verbindung miteinander verbunden sind, insbesondere von Telekommunikationseinrichtungen, die mit synchronen Arbeitstakten versorgt werden müssen und über ein Hochgeschwindigkeits-LAN (Local Area Network) miteinander verbunden sind.

Üblicherweise werden Telekommunikationseinrichtungen mit Hilfe von synchronen Netzwerken untereinander verbunden. Die Taktversorgung abgesetzter Einheiten erfolgt dabei mittels diverser Taktgeber, die als Slave arbeiten und einem Master-Taktgeber, welcher diese abgesetzten Einheiten mit Hilfe von Synchronisationspulsen aufsynchronisiert, welche an die Slave-Taktgeber versandt werden. Die Zeitdauer zwischen zwei Synchronisationspulsen wird mit Hilfe von Phasenregelkreisen überbrückt, welche den Takt in den Slave-Taktgebern konstant halten. Insbesondere bei der digitalen Datenübertragung ist die exakte Synchronisation aller Systemeinheiten wichtig, damit keine Datenbits verloren gehen können. Mit zunehmender Laufzeit des Synchronisationspulses, die beispielsweise durch große Leitungslängen zwischen dem Master- und den Slave-Taktgebern verursacht werden kann, verschiebt sich jedoch die Phasenlage des Slave-Taktes zum Master-Takt in Abhängigkeit der Zeitdauer, welche der Synchronisationspuls auf seinem Weg vom Master- zum Slave-Taktgeber benötigt. Probleme treten dann auf, wenn die Laufzeit eine Phasenabweichung des Slave-Taktes gegenüber dem Master-Takt bedingt, die größer ist, als die für eine jeweilige Kommunikationsanwendung zulässige Phasenabweichung. Probleme können also bei sehr hohen Taktraten, bzw. sehr kleinen zulässigen Phasenabweichungen auftreten.

Es gibt jedoch Telekommunikationseinrichtungen am Markt, die sehr strenge Anforderungen an die Takt- und die Phasengenauigkeit des Arbeitstaktes im gesamten Kommunikationssystem stellen. Besonders hohe Anforderungen an die Qualität der Taktversorgung stellen in dieser Hinsicht digitale Drahtloskommunikationsverbindungen, wie beispielsweise nach dem DECT-Standard (Digital Enhanced Cordless Telephone) und nach dem GSM-Standard (Global System for Mobile Communication). Dort müssen Gesprächsverbindungen von Basisstationen, die unterschiedliche Kommunikationszellen bedienen, aneinander weitergereicht werden, falls sich ein Kommunikationsteilnehmer bei bestehender Verbindung in eine benachbarte Kommunikationszelle bewegt, ohne daß dabei die Verbindungsqualität beeinträchtigt werden darf.

Aus der Patentanmeldungs veröffentlichung Nr. 0 887 960 ist bekannt, Laufzeiten eines Testsignals und Beerbeitungszeiten in Signalverarbeitungseinrichtungen zur Phasenkompensation des Arbeitstaktes zu ermitteln.

Die der Erfindung zugrunde liegende Aufgabe besteht darin, ein Verfahren und eine Anordnung anzugeben, womit die Arbeitstakte von insbesondere über eine asynchrone übertragende Verbindung miteinander verbundenen Systemeinheiten über diese Verbindung synchronisiert werden können. Diese Aufgabe wird für das Verfahren gemäß den Merkmalen des Patentanspruches 1 und für die Anordnung gemäß den Merkmalen des Patentanspruches 7 gelöst. Weiterbildungen der Erfindung ergeben sich aus den abhängigen Ansprüchen.

Besonders vorteilhaft sieht es das erfindungsgemäße Verfahren vor, nicht lediglich die Laufzeit eines Signals zwischen den benachbarten Systemeinheiten zu messen, die insbesondere über ein asynchrones Netz miteinander verbunden sind, sondern ebenfalls die Verarbeitungsdauer zu berücksichtigen, welche eine Einheit für das Umsetzen eines Datenrahmens benötigt, der auf der asynchronen Verbindung eintrifft. Auf diese Weise wird vorteilhaft sichergestellt, daß die wesentlichen zeitrelevanten Vorgänge bei der Kommunikation der Systemeinheiten über das Verbindungsnetz berücksichtigt werden, also die Laufzeit und die Verarbeitungsdauer für die Umsetzung eines Kommunikationsprotokolles. Vorteilhaft ist die Anwendung der Erfindung sowohl für asynchrone Verbindungen als auch für synchrone übertragende Verbindungen, bei denen die Laufzeit eines Synchronisationspulses die Phasenlage der Arbeitstakte gegeneinander über ein zulässiges Maß hinaus verschiebt.

Die erforderlichen Messungen und Auswertungen, sowie die notwendigen Anpassungen können dabei in beliebiger Arbeitsteilung und technisch sinnvoller Kombination von einzelnen oder mehreren Einheiten durchgeführt werden. Beispielsweise können die Rolle der Master- und Slave-Einheit bei der Messung, Schleifenbildung und Taktangleichung beliebig vertauscht werden.

Vorteilhaft wird bei der Kompensation der Phasenlage nicht lediglich die Schleifenlaufzeit und die interne Verzögerungszeit berücksichtigt, sondern auch eine zulässige Phasenabweichung mit einbezogen. Auf diese Weise sind Taktschwankungen der Phasenregelschleife in gewissem Maße zulässig und ein zu übertragender Synchronisationspuls muß ggf. nicht so häufig versandt werden. Die Taktschwankungen dürfen dabei im Rahmen des Abtasttheorems sogar statistischer Natur sein.

Vorteilhaft sieht eine Variante des beschriebenen Verfahrens es vor, daß die eine Einheit, z.B. die Slave-Einheit ihre interne Verzögerungszeit an die andere Einheit, beispielsweise die Master-Einheit, übermittelt und diese ihren Takt, z.B. den Mastertakt, in Abhängigkeit dieser Verzögerungszeit und der Schleifenlaufzeit korrigiert. Die Master-Takt-Einheit verfügt in der Regel über höhere Rechenkapazitäten und kann eine Korrektur einfacher durchführen. Außerdem ist das Verfahren für mehrere mit einander verbundene Systemeinheiten praktikabel, die alle am gleichen Netz angeschlossen sind, wenn davon ausgegangen werden kann, daß die Übertragungsdauer der Signale an die unterschiedlichen Einheiten innerhalb des Netzes näherungsweise konstant sind und lediglich die Kommunikation zwischen zwei solchen Einheiten stattfinden muß, um alle Arbeitstakte der im System vorhandenen Kommunikationseinrichtungen aufeinander abzustimmen.

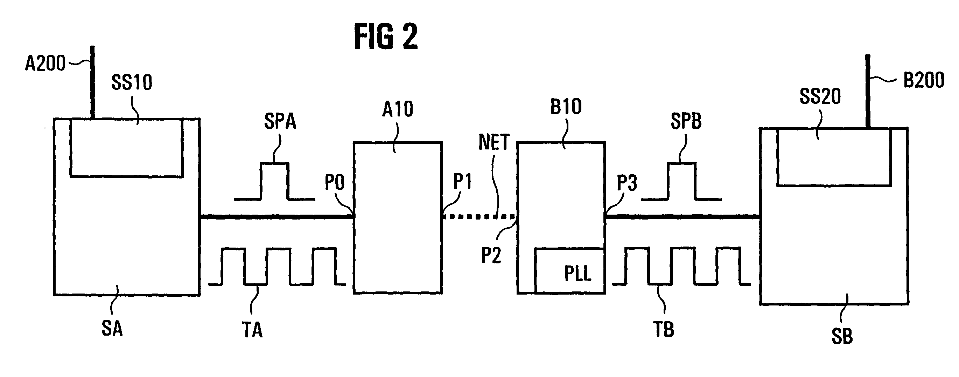

Ebenso kann die Messung der Schleifenlaufzeit durch die Slave-Einheit erfolgen, wenn die Master-Einheit die Verbindung durchschleift, um die Verzögerung durch die Master-Einheit zu ermitteln (P1->P0->P1 in Figur 2). Auf diese Weise könne vorteilhaft Slave-Einheiten ihren Takt und ihre Phasenlage selbsttätig anpassen.

Vorteilhaft sieht es eine weitere Variante des beschriebenen Verfahrens vor, daß abgesetzte Kommunikationseinrichtungen durch das Master-System mit der Schleifenlaufzeit versorgt werden und die Phasenlage ihrer Systemtakte entsprechend anpassen. Auf diese Weise wird vorteilhaft sichergestellt, daß in einem Systemverbund aus vielen Kommunikationseinrichtungen, deren Systemtakte phasenkorrigiert werden können, auch wenn zwischen ihnen und dem Master-System sehr große individuelle Schleifenlaufzeitunterschiede auftreten.

Vorteilhaft wird bei einer Weiterbildung des beschriebenen Verfahrens zur Synchronisation ein Synchronisationspuls versandt, da mit diesem auf bekannte Weise die Takte von Phasenregelkreisen synchronisiert werden können.

Vorteilhaft wird bei einer Weiterbildung des beschriebenen Verfahrens bei der Bestimmung der internen Verzögerungszeit einer Kommunikationseinheit ebenfalls der Zeitbedarf für die Umsetzung eines spezifischen aktuell verwendeten Kommunikationsprotokolls berücksichtigt, gemäß dem über die zeitverzögernd übertragene Verbindung kommuniziert wird. Diese Vorgehensweise erlaubt eine noch genauere Zeitanpassung der verschiedenen Systemeinheiten aneinander.

Vorteilhaft sieht es eine Weiterbildung des Verfahrens vor, daß dieses wiederholt, z.B. periodisch, ausgeführt wird, weil es dadurch möglich wird, einfachere Phasenregelkreise aufzubauen, deren Genauigkeitserfordernisse bezüglich der Takterzeugung mit der Verfahrenshäufigkeit, also abnehmender Periode, abnehmen kann.

Bevorzugt sieht es eine Weiterbildung des beschriebenen Verfahrens vor, daß die zeitverzögernd übertragende Verbindung asynchron arbeitet, weil in der Praxis viele Netze, insbesondere lokale Netze nach diesem Prinzip übertragen, jedoch einer Statistik unterworfen sind, die bedingt, daß für Signalübertragungen mittlere Laufzeiten auftreten, weswegen diese Variante des beschriebenen Verfahrens in der Praxis besonders vorteilhaft anwendbar ist.

Besonders vorteilhaft ist eine Anordnung zur Kompensation der Phasenlage eines Arbeitstaktes bei einer ersten und zweiten Systemeinheit, bei der die Verbindung zwischen den beiden Systemeinheiten durchgeschleift wird, weil auf diese Weise die Laufzeit eines Testsignales zwischen den beiden Systemeinheiten sehr einfach bestimmt werden kann und es völlig gleichgültig ist, ob diese beiden Systemeinheiten durch eine synchrone oder eine asynchrone Verbindung miteinander verbunden sind. In Kombinationen mit Mitteln zur Bestimmung der internen Verzögerungszeit zur Verarbeitung eines Signals bei der zweiten Systemeinheit wird so eine technisch einfach aufgebaute Anordnung zur Synchronisation der Phasenlage von Arbeitstakten von Kommunikationseinrichtungen zur Verfügung gestellt, die durch zeitverzögernd übertragene Verbindung miteinander verbunden sind.

Vorteilhaft sind bei einer Weiterbildung der beschriebenen Anordnung in den unterschiedlichen Systemeinheiten Taktgeneratoren vorhanden, die lediglich mittels eines Synchronisationspulses aufeinander abgestimmt werden, weil auf diese Weise lediglich ein Minimum an Steuersignalen in Form von Synchronisationspulsen über die Verbindung übertragen werden muß und der Rest der Übertragungskapazität der Verbindung für Nutzsignale oder andere Signalisierungsinformation zur Verfügung steht.

Anstelle des Synchronisationspulses kann auch ein andere Form der Übertragung der Synchronisationsinformation in Form eines Zeitstempels verwendet werden.

Vorteilhaft sind bei einer Weiterbildung der beschriebenen Anordnung an den jeweiligen Systemeinheiten Basisstationen für drahtlose Kommunikationsverbindungen angeschlossen, weil durch die beschriebene Anordnung eine Taktgüte und Phasengüte erzielbar ist, die sich besonders für den Aufbau drahtloser Kommunikationsverbindungen eignet und insbesondere für die Übergabe bestehender Verbindungen zwischen benachbarten Basisstationen, welche über zeitverzögernde Kommunikationsverbindungen miteinander mittelbar oder unmittelbar verbunden sind.

Vorteilhaft ist bei einer Weiterbildung der beschriebenen Anordnung zwischen den Systemeinheiten eine asynchrone übertragende Verbindung als Verbindung vorgesehen, weil in der Praxis häufig Kommunikationsverbindungen über lokale Netze aufgebaut werden, welche in der Regel asynchron arbeiten und die beschriebene Anordnung besonders geeignet ist, auch in Kombination mit Asynchronverbindungen eingesetzt zu werden, weil die Ursache und Art der Verzögerung für ihre Funktion ohne Belang ist.

Im folgenden wird die Erfindung anhand von Beispielen und Figuren weiter erläutert.

Figur 1 zeigt einen schematisierten Zeitablauf bei der Taktsynchronisation zweiter Systemeinheiten.
Figur 2 zeigt zwei Systemeinheiten, welche mittels eines zeitverzögernd übertragenen Netzes untereinander verbunden sind.

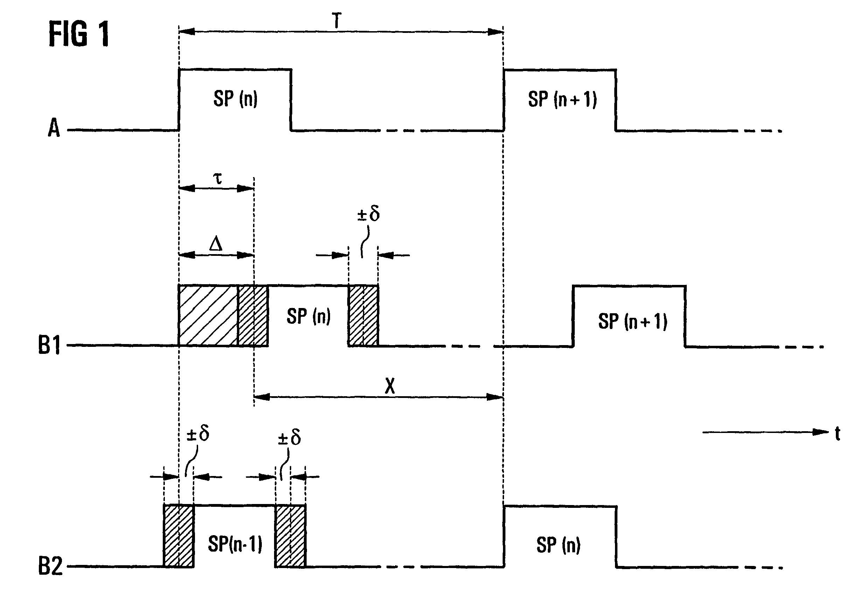

Figur 1 veranschaulicht anhand eines Zeitablaufschemas die Problematik, die bei der Synchronisation von Systemeinheiten auftritt, welche über ein zeitverzögernd übertragendes Netz miteinander verbunden sind, und deren Arbeitstakte trotzdem synchron erfolgen sollen. Das Problem tritt in besonders hohem Maße auf, wenn die Entfernung zwischen den Systemeinheiten besonders groß ist, wenn die Taktrate sehr hoch ist, oder wenn die erlaubte Phasenabweichung der Arbeitstakte voneinander sehr klein ist.

Hier sind drei Systemeinheiten A, B1 und B2 gezeigt. In einer beispielhaften Ausführungsform kann das System A als Master-Taktgeber fungieren, während die Systeme B1 und B2 als Slave-Taktgeber ihre Arbeitstakte in Abhängigkeit des von A vorgegebenen Arbeitstaktes synchronisieren. Voraussetzung ist dabei, daß die Phasenverschiebung zwischen diesen Arbeitstakten einen bestimmten vorgegebenen Betrag nicht überschreiten oder unterschreiten darf. Die Taktversorgung der jeweiligen Systemeinheiten kann beispielsweise durch Phasenregelkreise in Verbindung mit einem eigens für jede Systemeinheit vorgesehenen Taktgenerator erfolgen.

Die Systemeinheit A versendet zur Synchronisation der anderen Systemeinheiten lediglich eine Synchronisationsinformation beispielsweise in Form eines Synchronisationspulses SP(n), der von A wiederholt, bspw. periodisch, abgegeben wird. Die Periode des Synchronisationspulses ist mit T bezeichnet. Nach rechts ist in Figur 1 die Zeitachse aufgetragen. Dargestellt sind sowohl der n-1-te, der n-te Synchronisationspuls SP(n-1), SP(n), als auch der N+1-Synchronisatiospuls SP(n+1).

Der von A abgegebene Synchronisationspuls SP(n) trifft bei B1 zeitverzögert um den Betrag $\tau$ ein, wobei diese Zeitverzögerung verursacht wird durch die Laufzeit $\lambda$ des Singales auf der Verbindung zwischen A und B1 und der internen Verzögerungszeit $\pi$, welche B1 benötigt, um die Synchronisationsinformation des Systemes A aufzubereiten und zu erkennen.

Beim Versenden von Nachrichten und Steuerungsinformationen über asynchrone Netze, wie beispielsweise GBit-Ethernets werden häufig Kommunikationsprotokolle eingesetzt, die nach dem OSI-Schichtenmodel strukturiert sind. Für die Codierung der Signalisierungsinformation wird dabei häufig das HDLC-Protokoll (High Level Data Link Control) verwendet. Sprache wird häufig nach dem PCM-Verfahren (Pulse Code Modulation) aufbereitet.

Der Aufwand zur Dekodierung der Information steigt dabei mit der Anzahl der Protokollschichten, die bis zum Erhalt der benötigten Informationen umgesetzt werden müssen. Der Synchronisationspuls beispielsweise kann über die Schicht 3, die Netzvermittlungsschicht des OSI-Schichtenmodelles übertragen werden. Verzögerte Signallaufzeiten treten aber nicht lediglich bei asynchronen übertragenen Verbindungen auf, sondern auch bei synchronen Verbindungen, wenn die Übertragungsstrecke besonders groß ist. Die erlaubte Phasenabweichung beträgt hier $\pm\delta$ und ist als grauschraffierter Bereich dargestellt. Die aktuelle Phasenverschiebung ergibt sich unter Berücksichtigung der positiven und negativen erlaubten Phasenverschiebung zu $\Delta$. Um die Systemeinheit B1 bezogen auf die Systemeinheit A mit einem phasenkorrekten Arbeitstakt zu versorgen, ist es also erforderlich den Synchronisationspuls für B in negativer Zeitrichtung um $\Delta$, oder in positiver Zeitrichtung um die Kompensationsverzögerung X zu verschieben.

Wie das Beispiel der Systemeinheit B2 zeigt, führt diese Vorgehensweise zu einer korrekten Phasenlage. Dieser Sachverhalt ist bei B2 anhand von Synchronisationspulsen SP(n-1) und SP(n) gezeigt, wobei n-1, n und n+1 für aufeinanderfolgende Taktperioden stehen.

Entsprechend dem beschriebenen Verfahren wird der Phasenabgleich des Synchronisationspulses SP dadurch erreicht, daß beispielsweise in der Systemeinheit A die Verzögerungszeit eines von dort ausgehenden Signales auf dem Hin- und Rückweg von A nach B1 gemessen wird. Diese entspricht $2\lambda$, weil das Signal dabei den doppelten Weg von A nach B zurücklegt. Zusätzlich muß für die Berechnung der korrekten Signalverzögerung noch die Verzögerungszeit $\tau$ berücksichtigt werden, welche B benötigt um den Synchronisationspuls zu identifizieren und ggf. weiterzugeben. Die Kompensationsverzögerung X wird so addiert, daß die Laufzeit $\lambda$ addiert mit der Verzögerungszeit $\tau$ und der Kompensationsverzögerung X gleich ist einem Vielfachen der Periode der Synchronisationspulse. Dieser Zusammenhang ist in der nachfolgenden Gleichung dargestellt:

$$\lambda + \pi + X = n * T.$$

Falls nicht B2 selbst Verwerter des Synchronisationspulses ist, sondern weitere Slave-Taktgeber mit diesen Synchronisationspulsen versorgen soll, ist es erforderlich, eine sehr genauen Phasenregelkreis (PLL) in B vorzusehen.

Figur 2 zeigt eine schematisierte Darstellung von Kommunikationseinrichtungen, welche über ein zeitverzögernd übertragendes Netz miteinander verbunden sind. Hier sind beispielsweise eine Telekommunikationseinrichtung SA und eine Telekommunikationseinrichtung SB über ein asynchrones Netz NET miteinander verbunden. Die Verbindung wird beispielsweise direkt oder über Schnittstelleneinrichtungen A10 und B10 bewerkstelligt. Bei einer Variante von beschriebenen Kommunikationseinrichtungen zur Bereitstellung einer direkten Verbindung können die Schnittstelleneinrichtungen in den Telekommunikationseinrichtungen integriert und im gleichen Gehäuse untergebracht sein. An den Schnittstellen sind Übergabepunkte P0, P1, P2 und P3 markiert. Die Kommunikationseinrichtung kann beispielsweise eine Vermittlungsanlage sein, welche über eine Schnittstelle SS10 und eine Leitung A200 eine Basisstation eines drahtlosen Kommunikationsnetzes bedient. Die Kommunikationseinrichtung SB beispielsweise kann ebenfalls eine Vermittlungseinrichtung sein, oder auch eine Peripherieeinrichtung der Vermittlungseinrichtung SA. SB kann beispielsweise über eine Schnittstelle SS20 und eine Leitung B200 ebenfalls eine Basisstation eines drahtlosen Kommunikationsnetzes ansteuern. dabei können diese Basisstationen benachbarte Zellen eines privaten oder lokal begrenzten drahtlosen Kommunikationsnetzes bedienen.

Als drahtlose Kommunikationsnetze sind insbesondere zellulare Kommunikationsnetze nach dem GSM- oder DECT-Standard bekannt. Bei diesen digital übertragenden Funknetzen können sich Benutzer drahtloser Peripherieeinrichtungen in verschiedenen Zellen bewegen, die jeweils wieder von unterschiedlichen Basisstationen des Systems bedient werden. Bei diesem sog. Roaming ist es wichtig, daß eine bestehende Kommunikationsverbindung von einer Basisstation zu einer nächsten Basisstation unmerklich für den Benutzer und ohne Datenverluste weitergegeben wird. dieser Vorgang wird in der Fachsprache auch als "handoff" bezeichnet. Dazu müssen von den Schnittstellen SS10 und SS20 bestimmte Zeitbedingungen erfüllt werden. Insbesondere darf eine vorgegebene erlaubte Phasenverschiebung des Taktsignales, bzw. eines vorgegebenen Synchronisationspulses nicht überschritten werden.

In dem hier dargestellten Beispiel versorgt die Vermittlungseinrichtung SA ihre Peripheriegeräte mittels eines Arbeitstaktes TA und synchronisiert periphere Taktgeber mittels eines Synchronisationspulses SP. SA stellt also beispielsweise hier den Master-Taktgeber für weitere Einrichtungen im Netzverbund dieser Vermittlungseinrichtung dar. Beispielsweise soll SB mit diesem Arbeitstakt über das zeitverzögernd übertragende Netz NET versorgt werden.

Dargestellt ist die Synchronisationsinformation in Form des Synchronisationspulses SPB und der Arbeitstakt TB der peripheren Einrichtung SB. Zwischen SPA und SPB, respektive TA und TB ist lediglich die vorgegebene erlaubte Phasenverschiebung zulässig, welche in Figur 1 mit $\pm\delta$ bezeichnet wurde. Falls diese Bedingung nicht eingehalten wird, treten Datenverluste auf, wenn eine Basisstation, die über A200 angeschlossen ist, ein Gespräch an eine Basisstation weitergibt, die an B200 angeschlossen ist. Gemäß dem beschriebenen Verfahren wird also zunächst die Laufzeit eines Signales von P0 nach P1, P1 nach P2 und wieder zurück, bzw. von P0 nach P3 und wieder zurück gemessen. Hierzu wird die Kommunikationsverbindung von P0 aus bis zum jeweiligen Endpunkt durchgeschleift. Die zu ermittelnde Laufzeit des Signales sollte dabei mit einer Meßgenauigkeit erfaßt werden, die erheblich über jener der zulässigen Erlaubten Phasenverschiebung liegt, beispielsweise mit 1/10 der erlaubten Phasenverschiebung.

In einem weiteren Schritt des beschriebenen Verfahrens wird die Verarbeitungsdauer für die Erkennung des über NET versandten Signales bestimmt. Der Aufwand entsteht durch das Auspacken der Nutzinformation aus den Protokollschichten. Dies kann beispielsweise während einer Startprozedur der Schnittstelleneinrichtung B10 geschehen, indem diese einen zu diesem Zweck gespeicherten entsprechenden Protokollabschnitt und Datenrahmen einliest und aufbereitet und die dafür benötigte Zeitdauer mißt.

Zur Kompensation der Phasenverschiebung können sich nun A10 und B10 die zuvor gemessenen charakteristischen Zeiten gegenseitig übermitteln. Bevorzugt wird die Schnittstelleneinrichtung A10 die ermittelte Laufzeit an die Schnittstelleneinrichtung B10 weitergeben und diese wird entsprechend ihren Synchronisationspuls, wie auch in Figur 1 schon dargestellt, in der Phase korrigieren. Dies führt zu isochronen Systemtakten TA und TB der Kommunikationseinrichtungen SA und SB. Für die Takterzeugung in B10 ist hier ein Phasenregelkreis PLL zuständig.

Die Erfindung stellt ein einfaches Verfahren und eine technisch einfach realisierbare Anordnung zur Verfügung, mit welcher beispielsweise lokal begrenzte zellulare Funknetze betreibbar sind, wobei die einzelnen Basisstationen für die jeweiligen Zellen des Netzes durch ein lokales Computernetz miteinander verbunden sind, das asynchron arbeitet.

**Patentansprüche**

1. Verfahren zur Kompensation der Phasenlage eines Arbeitstaktes bei einer ersten und einer zweiten Systemeinheit (SA, SB; A10, B10) über eine zeitverzögernd übertragende Verbindung (NET) der Systemeinheiten, bei dem

   a) die erste Systemeinheit (SA, A10) ein Testsignal (SPA) über die Verbindung (NET) sendet, welches von der zweiten Systemeinheit (SB, B10) durchgeschleift und zurückgesendet wird, und in Form einer Schleifenlaufzeit die Zeitdauer mißt, die vom Versenden bis zum Eintreffen des Testsignals (SPA) vergeht,
   b) die zweite Systemeinrichtung (SB, B10) mindestens die Verarbeitungsdauer ermittelt, die sie für die Verarbeitung eines über die Verbindung (NET) eintreffenden Signals benötigt, in Form einer internen Verzögerungszeit und
   c) die Phasenlage des Arbeitstaktes der ersten und zweiten Systemeinheit (SA, SB; A10, B10) unter Verwendung der Schleifenlaufzeit, sowie der internen Verzögerungszeit kompensiert wird, **dadurch gekennzeichnet, daß**
   d) eine zulässige Phasenabweichung (δ) der Phasenlage vorgegeben wird und die Phasenlage unter Berücksichtigung der zulässigen Phasenabweichung kompensiert wird.

2. Verfahren nach Anspruch 1, bei dem die zweite Systemeinheit (SB, B10) der ersten Systemeinheit (SA, A10) eine Angabe über ihre interne Verzögerungszeit übermittelt und die erste Systemeinheit (SA, A10) die Phasenlage kompensiert.

**3.** Verfahren nach Anspruch 1,
bei dem die erste Systemeinheit (SA, A10) der zweiten Systemeinheit (SB, B10) eine Angabe über die Schleifenlaufzeit übermittelt und die zweite Systemlaufzeit (SB, B10) die Phasenlage kompensiert.

**4.** Verfahren nach einem der vorangehenden Ansprüche,
bei dem über die Verbindung (NET) nach einem Kommunikationsprotokoll kommuniziert wird und bei der Bestimmung der internen Verzögerungszeit der Aufwand für die Protokollumsetzung erfaßt wird.

**5.** Verfahren nach einem der vorangehenden Ansprüche,
das in periodischen Zeitabständen durchgeführt wird.

**6.** Verfahren nach einem der vorangehenden Ansprüche,
bei dem die zeitverzögernd übertragende Verbindung (NET) asynchron überträgt.

**7.** Anordnung zur Kompensation der Phasenlage eines Arbeitstaktes bei einer ersten und einer zweiten Systemeinheit (SA, SB; A10, B10) über eine zeitverzögernd übertragende Verbindung der Systemeinheiten (NET) mit

a) ersten Mitteln zur Abgabe eines Testsignals (SPA) über die Verbindung (NET) in einer Systemeinheit (SA, A10),
b) zweiten Mitteln zum Durchschleifen der Verbindung zwischen der ersten und der zweiten Systemeinheit (SA, SB; A10, B10),
c) dritten Mitteln zur Bestimmung der Laufzeit des Testsignals (SPA) über die durchgeschleifte Verbindung in Form einer Schleifenlaufzeit und
d) vierten Mitteln zur Bestimmung der Verarbeitungsdauer eines über die Verbindung versandten Signals durch eine Systemeinheit (SA, SB; A10, B10) in Form einer internen Verzögerungszeit, und **gekennzeichnet durch**
e) fünfte Mittel zur Kompensation der Phasenlage des Arbeitstaktes einer Systemeinheit (SA, SB; A10, B10) in Abhängigkeit der Schleifenlaufzeit und der internen Verzögerungszeit und unter Berücksichtigung einer vorgegebenen zulässigen Phasenabweichung (δ) der Phasenlage.

**8.** Anordnung nach Anspruch 7,
bei der

- die erste Systemeinheit (SA, A10) als Vermittlungseinrichtung für leitungslose und/oder leitungsgebundene Kommunikationsverbindungen ausgebildet ist und eine erste Basisstation aufweist,
- die zweite Systemeinheit (SB, B10) eine Basisstation eines leitungslosen Kommunikationsnetzes aufweist,
- die zeitverzögernd übertragende Verbindung (NET) als ein einen verbindungslosen Dienst bereitstellendes Hochgeschwindigkeitsnetz ausgebildet ist.

**9.** Anordnung nach einem der Ansprüche 7 oder 8,
bei der die zeitverzögernd übertragende Verbindung (NET) eine asynchrone Verbindung ist.

**Claims**

**1.** Method for the compensation of the phase angle of an operating clock signal in the case of a first and a second system unit (SA, SB; A10, B10) by means of a connection (NET) of the system units which effects transmission in a time-delaying manner, in which:

a) the first system unit (SA, A10) sends a test signal (SPA) via the connection (NET), this signal being looped through and returned by the second system unit (SB, B10), and measures, in the form of a loop propagation delay, the time duration which elapses between the sending and the arrival of the test signal (SPA);
b) the second system device (SB, B10) determines at least the processing duration which it requires for processing a signal arriving via the connection (NET), in the form of an internal delay time; and
c) the phase angle of the operating clock signal of the first and second system units (SA, SB; A10, B10) is compensated using the loop propagation delay and also the internal delay time, **characterized in that**
d) a permissible phase deviation (δ) of the phase angle is predetermined and the phase angle is compensated taking account of the permissible phase deviation.

**2.** Method according to claim 1,
in which the second system unit (SB, B10) communicates an information item concerning its internal delay time to the first system unit (SA, A10) and the first system unit (SA, A10) compensates the phase angle.

**3.** Method according to claim 1,
in which the first system unit (SA, A10) communicates an information item concerning the loop propagation delay to the second system unit (SB, B10) and the second system unit (SB, B10) compensates the phase angle.

4. Method according to one of the preceding claims, in which communication is effected via the connection (NET) according to a communications protocol and the outlay for the protocol conversion is registered in the course of the determination of the internal delay time.

5. Method according to one of the preceding claims, which is carried out at periodic time intervals.

6. Method according to one of the preceding claims, in which the connection (NET) which effects transmission in a time-delaying manner transmits asynchronously.

7. Arrangement for the compensation of the phase angle of an operating clock signal in the case of a first and a second system unit (SA, SB; A10, B10) by means of a connection of the system unit (NET) which effects transmission in a time-delaying manner, having

a) first means for outputting a test signal (SPA) via the connection (NET) in a system unit (SA, A10),
b) second means for looping through the connection between the first and second system units (SA, SB; A10, B10),
c) third means for determining the propagation delay of the test signal (SPA) via the looped-through connection in the form of a loop propagation delay, and
d) fourth means for determining the duration of processing of a signal - sent via the connection - by a system unit (SA, SB; A10, B10) in the form of an internal delay time, and **characterized by**
e) fifth means for the compensation of the phase angle of the operating clock signal of a system unit (SA, SB; A10, B10) as a function of the loop propagation delay and of the internal delay time and taking amount of a predetermined permissible phase deviation (8) of the phase angle.

8. Arrangement according to claim 7, in which

- the first system unit (SA, A10) is designed as switching device for line-free and/or line-based communications links and has a first base station,
- the second system unit (SB, B10) has a base station of a line-free communications network,
- the connection (NET) which effects transmission in a time-delaying manner is designed as a high-speed network providing a connectionless service.

9. Arrangement according to either of claims 7 and 8, in which the connection (NET) which effects transmission in a time-delaying manner is an asynchronous connection.

## Revendications

1. Procédé de compensation de la relation de phase d'une horloge de travail dans une première et une deuxième unité de système (SA, SB ; A10, B10) par l'intermédiaire d'une liaison (NET), transmettant avec un certain retard, des unités de système, dans lequel

a) la première unité de système (SA, A10) envoie par l'intermédiaire de la liaison (NET) un signal de test (SPA), qui effectue un parcours en boucle en étant renvoyé par la deuxième unité de système (SB, B10), et elle mesure sous la forme d'un temps de parcours de boucle le temps qui passe entre l'émission et l'arrivée du signal de test (SPA),
b) la deuxième unité de système (SB, B10) détermine au moins la durée de traitement, dont elle a besoin pour traiter un signal arrivant par l'intermédiaire de la liaison (NET), en tant que retard interne, et
c) la relation de phase de l'horloge de travail de la première et de la deuxième unité de système (SA, SB ; A10, B10) est compensée en utilisant le temps de parcours de boucle et le retard interne,
**caractérisé par le fait que**
d) un écart de phase autorisé ($\delta$) de la relation de phase est prescrit et la relation de phase est compensée en tenant compte de l'écart de phase autorisé.

2. Procédé selon la revendication 1, dans lequel la deuxième unité de système (SB, B10) transmet à la première unité de système (SA, A10) une indication concernant son retard interne et la première unité de système (SA, A10) compense la relation de phase.

3. Procédé selon la revendication 1, dans lequel la première unité de système (SA, A10) transmet à la deuxième unité de système (SB, B10) une indication concernant le temps de parcours de boucle et la deuxième unité de système (SB, B10) compense la relation de phase.

4. Procédé selon l'une des revendications précédentes,
dans lequel on communique par l'intermédiaire de la liaison (NET) selon un protocole de communication et, lors de la détermination du retard interne, on détecte les dépenses nécessaires à la conversion de protocole.

**5.** Procédé selon l'une des revendications précédentes, qui est exécuté à intervalles de temps périodiques.

**6.** Procédé selon l'une des revendications précédentes,
dans lequel la liaison (NET) transmettant avec un certain retard transmet de manière asynchrone.

**7.** Dispositif de compensation de la relation de phase d'une horloge de travail dans une première et une deuxième unité de système (SA, SB ; A10, B10) par l'intermédiaire d'une liaison (NET), transmettant avec un certain retard, des unités de système, comportant

a) des premiers moyens pour délivrer un signal de test (SPA) dans une unité de système (SA, A10) par l'intermédiaire de la liaison (NET),
b) des deuxièmes moyens pour parcourir en boucle la liaison entre la première et la deuxième unité de système (SA, SB ; A10, B10),
c) des troisièmes moyens pour déterminer le temps de parcours du signal de test (SPA) sur la liaison parcourue en boucle, et ce en tant que temps de parcours de boucle, et
d) des quatrièmes moyens pour déterminer la durée de traitement d'un signal émis par l'intermédiaire de la liaison par une unité de système (SA, SB ; A10, B10), et ce en tant que retard interne,
et **caractérisé par**
e) des cinquièmes moyens pour compenser la relation de phase de l'horloge de travail d'une unité de système (SA, SB ; A10, B10) en fonction du temps de parcours de boucle et du retard interne et en tenant compte d'un écart de phase autorisé ($\delta$), prescrit, de la relation de phase.

**8.** Dispositif selon la revendication 7,
dans lequel

- la première unité de système (SA, A10) est conçue comme un dispositif de commutation pour des liaisons de communication sans fil et/ou par fil et comporte une première station de base,
- la deuxième unité de système (SB, B10) comporte une station de base d'un réseau de communication sans fil,
- la liaison (NET) transmettant avec un certain retard est conçue comme un réseau à grande vitesse proposant un service sans connexion.

**9.** Dispositif selon l'une des revendications 7 ou 8, dans lequel la liaison (NET) transmettant avec un certain retard est une liaison asynchrone.

FIG 1

EP 1 079 559 B1

# FIG 2

EP 1 079 559 B1